# EUROPEAN PATENT SPECIFICATION

(11) **EP 1 327 553 B1**
(45) Date of publication and mention of the grant of the patent: **08.08.2007**
(21) Application number: 03000350.3
(22) Date of filing: 09.01.2003
(51) Int. Cl.: B60K 31/00

(54) **Parking assist system and method for control thereof**
Einparkhilfevorrichtung und -steuerverfahren
Dispositif d'assistance de parking et procédé pour sa commande

(30) Priority: 11.01.2002 JP 2002005078
(43) Date of publication of application: 16.07.2003
(73) Proprietor: Toyota Jidosha Kabushiki Kaisha, Toyota-shi, Aichi-ken, 471-8571 (JP)
(72) Inventor: Iwazaki, Katsuhiko, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- DE-A- 19 753 764
- DE-A- 19 844 542
- DE-A- 19 941 482
- DE-A- 19 954 807
- US-A- 6 018 692

## Description

### BACKGROUND OF THE INVENTION

### 1. Field of Invention

The invention relates to a parking assist system provided with a low speed mode in which a vehicle runs at or under a predetermined upper limit vehicle speed, and a control method for that parking assist. More particularly, the invention relates to a parking assist system which adjusts a vehicle speed by controlling a braking force while applying a driving force to the vehicle.

### 2. Description of Related Art

A variety of technologies for maintaining a vehicle speed within a predetermined range when the vehicle is running have been known, such as an automatic cruise system which is operable to obtain a predetermined vehicle speed in a relatively high vehicle speed range by automatically adjusting an accelerator opening. There are known systems, such as disclosed in Japanese Patent Laid-Open Publication No. 10-278825, for controlling a vehicle speed at the time of running at a low speed. The system disclosed in this publication performs automatic parking by creeping. With this system, more specifically, the vehicle speed is basically controlled by the driver, and informing means informs the driver when the vehicle speed exceeds the speed range appropriate for automatic parking, thus urging the driver to apply the brake.

Note that since the vehicle is likely to accelerate or decelerate due to gravity when a road surface is inclined, braking force needs to be applied to the vehicle in consideration of this. Japanese Patent Laid-Open Publication No.10-297520 discloses a system according to the preamble of claim 1 which monitors the braking force and the driving force which are applied to the vehicle. The system is adapted to cancel the automatic parking when the braking force and driving force are out of predetermined ranges and it is therefore impossible to control the running speed of the vehicle within a speed range appropriate for parking. However, even when the predetermined vehicle speed range can be obtained, in the case of a steeply inclined downhill slope, the braking force required to maintain the proper vehicle speed increases since the vehicle accelerates due to gravity. This not only increases the load on the brake system but also makes it particularly difficult to make use of the low vehicle speed range which requires the braking force. Also, in the case of a steeply inclined uphill slope, the braking force required to maintain the vehicle speed decreases since the vehicle decelerates due to gravity, but a maximum vehicle speed itself when the braking force is not applied is reduced. This creates a need for an accelerator operation and makes it difficult to make use of a vehicle speed range in the vicinity of the upper limit only by a braking operation. As mentioned above, in any of these cases, an adequate vehicle speed range cannot be obtained only by a braking operation.

### SUMMARY OF THE INVENTION

Accordingly, it is an object of the invention to provide a parking assist system capable of reliably making use of a vehicle speed range, which is from a state where a vehicle is stationary to an upper limit vehicle speed, without placing a load on a brake system.

This object is attained by providing the system of claim 1 and the method of claim 10.

A parking assist system according to a first aspect of the invention is provided with a vehicle speed control mode for generating a predetermined driving torque and applying a braking force to a vehicle such that a vehicle speed thereof does not exceed the upper limit, and includes a control portion for determining an inclination of a road surface and setting an operating state of the vehicle speed control mode in accordance with the inclination, wherein the parking assist is cancelled when the inclination angle of the road surface is steep.

The parking assist system determines the inclination of the road surface, determines whether or not to execute the vehicle speed control mode depending on the determined inclination of the road surface, and sets the operating state such as conditions for executing the vehicle speed control mode. This enables a driver to reliably make use of the vehicle speed range, which is from a state where the vehicle is stationary to an upper limit vehicle speed, only by a braking operation at the time of executing the vehicle speed control mode. It is sufficient to set the vehicle speed control mode in accordance with the inclination. It is not necessary to determine specifically the angle of inclination.

It is preferable to determine the inclination based on the vehicle speed or an acceleration at the time of setting the vehicle speed control mode while the vehicle is stationary, or a deviation between an estimated acceleration, which is estimated from the driving force and the braking force, and an actual acceleration, or a deviation between an actual braking force and the braking force, which is estimated from the acceleration of the vehicle. In this way, the degree of the inclination of the road surface can be determined based on a component of a gravitational acceleration in the road surface direction, corresponding to the degree of inclination, or excessive braking force corresponding to that component.

When it is determined that the vehicle cannot run at a vehicle speed which is equal to or higher than a predetermined vehicle speed with a predetermined driving torque with the determined inclination of the road surface, it is preferable to prohibit operation of the vehicle speed control mode since it is difficult to make use of the vehicle speed range in the vicinity of the upper limit vehicle speed.

Also, when it is determined that the vehicle speed exceeds the upper limit vehicle speed even when a predetermined braking force is applied to the vehicle with the determined inclination of the road surface, it is preferable to prohibit the operation of the vehicle speed control mode since it is difficult to make use of the vehicle speed range in the vicinity of where the vehicle is stationary or creeping.

It is preferable to adjust the predetermined driving torque in accordance with the determined inclination of the road surface. Thus, it becomes possible to adjust a vehicle speed within the predetermined vehicle speed range while applying a braking force within a range which does not cause an excessive load on the brake system.

A parking assist system according to the invention which assists a driver in moving a vehicle to a target parking position that is set only by a braking operation by the driver using position detecting means and an automatic steering system is characterized by including a running control system according to the invention, and setting a state of a parking assist operation depending on a state of an operation of the vehicle speed control mode.

In this way, when the inclination of the road surface is steep and the vehicle speed range cannot be sufficiently made use of, the vehicle speed control and the parking assist are prohibited from being performed. This suppresses the load on a system by not executing the parking assist operation in the case of the downhill slope whose inclination is so steep that the automatic steering system cannot deal with, or the uphill slope where an adequate vehicle speed cannot be maintained only by the brake.

### BRIEF DESCRIPTION OF THE DRAWINGS

The above mentioned exemplary embodiment and other exemplary embodiments, objects, features, advantages, technical and industrial significance of this invention will be better understood by reading the following detailed description of the exemplary embodiments of the invention, when considered in connection with the accompanying drawings, in which:
FIG. 1 is a schematic diagram showing a parking assist system according to the invention including a running control system ;
FIG. 2 is a diagram illustrating an outline of a parking assist control shown in FIG. 1;
FIG. 3 is a flow chart illustrating a first operation setting routine of the running control system shown in Fig. 1;
FIG. 4 is a flow chart illustrating a second operation setting routine of the running control system shown in Fig. 1;
FIG. 5 is a flow chart illustrating a third operation setting routine of the running control system shown in Fig. 1; and
FIG. 6 is a graph showing a relation between an acceleration a and a brake hydraulic pressure P.

### DETAILED DESCRIPTION OF PREFERRED EMBODIMENTS

In the following description and the accompanying drawings, the invention will be described in more detail in terms of exemplary embodiments.

Hereafter, a preferred embodiment of the invention will be explained with reference to the accompanying drawings. In order to facilitate understanding of the explanation, the same reference numerals will, as much as possible, be assigned to the same components in each drawing, and overlapping explanations will be omitted.

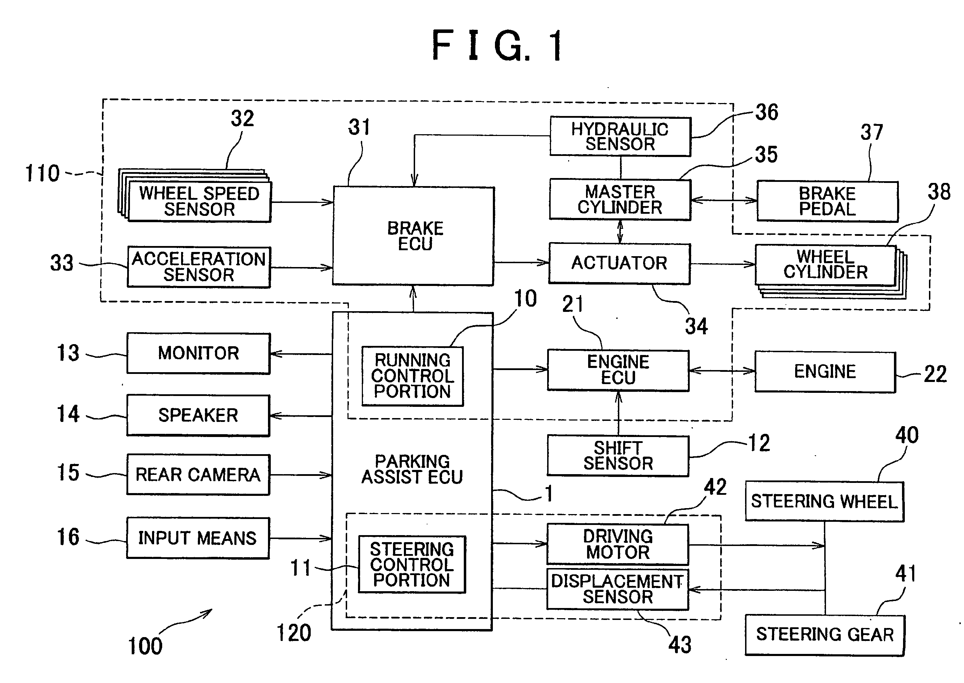

FIG. 1 is a block diagram of a parking assist system 100 according to the invention. According to the invention, the parking assist system 100 includes an automatic steering system 120 in addition to a running control system 110, and is controlled by a parking assist ECU 1, serving as a control system. The parking assist ECU 1 is provided with a CPU, ROM, RAM, an input signal circuit, an output signal circuit, a power circuit and the like, and includes a running control portion 10 for controlling the running control system 110 and a steering control portion 11 for controlling the automatic steering system 120. The running control portion 10 and the steering control portion 11 may be provided as separate pieces or sets of hardware in the parking assist ECU 1, or may be provided as separate software programs, to be executed by the same piece or set of hardware including a CPU, ROM, RAM, and so on.

The running control system 110 is provided with the above-mentioned running control portion 10, a brake system, and a driving system. The brake system is an electronically controlled brake (ECB) system for electronically controlling a braking force applied to each wheel by a brake ECU 31. In the brake system, more specifically, the braking force is controlled by adjusting a brake hydraulic pressure which is applied to a wheel cylinder 38 of a hydraulic brake provided to each wheel by an actuator 34. The brake ECU 31 receives output signals from various sensors such as a wheel speed sensor 32 which is provided to each wheel and detects a wheel speed thereof, an acceleration sensor 33 which detects an acceleration of the vehicle, a group of hydraulic sensors (not shown) which is provided inside the actuator 34 and detects the hydraulic pressure applied to an inside thereof and the wheel cylinder 38, and a master cylinder (M/C) hydraulic sensor 36 which detects a hydraulic pressure of a master cylinder 35 that is connected between a brake pedal 37 and the actuator 34.

An engine 22 serving as one component of the driving system is controlled by an engine ECU 21, and the engine ECU 21 and the brake ECU 31 execute a cooperative control by communicating with the running control portion 10. Meanwhile, the engine ECU 21 receives an output from a shift sensor 12 for detecting a shift state of a transmission.

The automatic steering system 120 includes a driving motor 42 which also serves as a power steering driving device arranged between a steering wheel 40 and a steering gear 41, and a displacement sensor 43 which detects a displacement amount of the steering. The steering control portion 11 is adapted to control the driving motor 42 while receiving output signals from the displacement sensor 43.

An image signal which is captured by a rear camera 15 for capturing an image of an area in back of the vehicle, and an output signal of input means 16 for receiving an operation input from the driver at the time of executing the parking assist are input to the parking assist ECU 1 which includes the running control portion 10 and the steering control portion 11. In addition, a monitor 18 for displaying information by image for the driver, and a speaker 14 for indicating the information by voice are connected to the parking assist ECU 1.

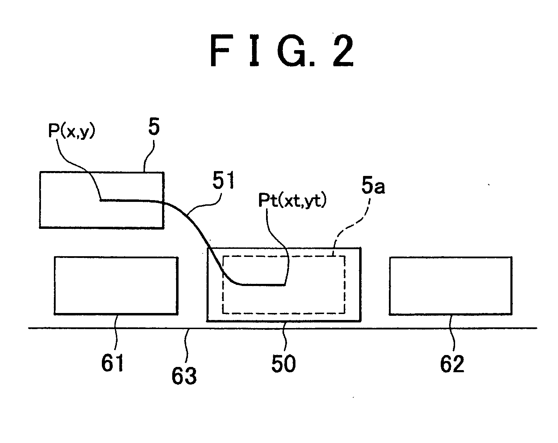

FIG. 2 is a diagram illustrating an outline of a parking assist control using the system. An example in which a vehicle 5 is moved from a position shown in the diagram to a position denoted by 5a, and is parallel-parked between a vehicle 61 and a vehicle 62 which are parked along a shoulder 63 will be explained.

First, after moving the vehicle 5 to the position shown in the figure, the driver sets a parking assist mode by operating the input means 16 while looking at the image captured by the rear camera 15 displayed on the monitor 13, and sets a target parking position by moving a parking frame displayed on the screen to the position 5a in the diagram. Hereinafter, the position of the center of the vehicle is referred to as P (x, y), and the position of the center of a target parking position 5a is referred to as Pt (xt, yt).

The parking assist ECU 1 determines Pt (xt, yt) by image recognition process. Pt (xt, yt) may be determined, for example, as a relative coordinate whose origin point is the current vehicle position P (x, y). Next, the parking assist ECU 1 determines an optimum route 51 for the center of the vehicle, from P (x, y) to Pt (xt, yt). The parking assist ECU 1 determines the routes, and then calculates a steering angle variation corresponding to a steering operation and vehicle center position of gravity necessary to take the route 51.

When the driver depresses the brake pedal 37 and operates the shift lever so as to put the vehicle in reverse, the running control portion 10 of the parking assist ECU 1 instructs the engine ECU 21 to increase a torque of the engine 22. Accordingly, the engine 22 rotates at a rotation speed higher than that of a regular idle state, and thereby switches to a torque increased state in which the driving force is strong. This extends the range of vehicle speed which can be adjusted only by the brake pedal 37 without operating the accelerator, and enhances a controllability of the vehicle.

When the driver releases the brake pedal 37, a wheel cylinder hydraulic pressure (a brake hydraulic pressure) which is applied to the wheel cylinder 38 by the actuator 34 in accordance with the pedal opening is adjusted, and the vehicle speed is adjusted by adjusting the braking force which is applied to each wheel. At this time, the actuator 34 adjusts the brake hydraulic pressure applied to each wheel cylinder 38 such that the vehicle speed detected by the wheel speed sensor 32 does not exceed the upper limit vehicle speed.

The steering control portion 11 controls the driving motor 42 so as to steer the steering gear 41 while monitoring an output from the displacement sensor 43 such that a steering angle agrees with a displacement of the steering angle obtained by the parking assist ECU 1. Since the vehicle is moved along the thereby set route, the driver can focus on confirming safe conditions of the route and adjusting the vehicle speed. In a case where there is an obstacle or a pedestrian in the route, when the driver depresses the brake pedal 37, the brake ECU 31 controls the actuator 43 such that a brake force corresponding to the depression amount is applied to the wheel cylinder 38, which allows the vehicle to decelerate or stop in safety.

The parking assist system according to the embodiment is characterized in that it determines a slope prior to the start of parking assist control, and sets an operation. Hereafter, several examples of the operation setting process will be explained in detail.

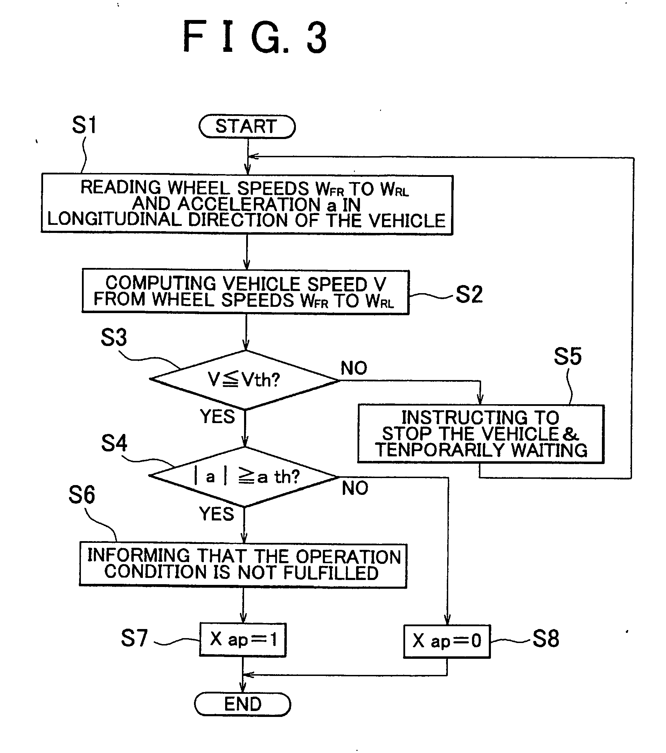

FIG. 3 is a flow chart illustrating a first operation setting routine. The process is executed while the vehicle is stationary immediately after the parking assist mode is set by the input means 16. In step S1, wheel speeds W_{FR} to W_{RL} of each wheel which are read by the wheel speed sensor 32, and an acceleration a in a longitudinal direction of the vehicle which is read by the acceleration sensor 33 are read. In step S2, a vehicle speed V is computed from the wheel speeds W_{FR} to W_{RL} of each wheel. In step S3, the absolute value and a threshold value Vth of the vehicle speed V are compared. Here, Vth is an adequately low vehicle speed (for example, 0.5 km/h), and may be set at 0 km/h.

When the absolute value of the vehicle speed V is equal to or lower than Vth, it is determined that the vehicle is substantially stationary, and the process proceeds on to step S4. When the absolute value of the vehicle speed V exceeds Vth, the process proceeds on to step S5, where the driver is instructed through the monitor 13 or the speaker 14 to stop the vehicle. Then, after waiting for a predetermined period of time, the process returns to step S1. This makes it possible to stop the vehicle with reliability and execute an accurate determination.

In step S4, an absolute value of the acceleration a and its threshold value ath are compared. In a state where the vehicle is stationary, an acceleration detected by the acceleration sensor 38 is a component of a gravitational acceleration speed g in the road surface direction. Assuming that an inclination angle of the road surface is θ, the acceleration detected by the acceleration sensor 38 is gsin θ, and increases with a increase in the inclination angle θ. Therefore, when it is determined that the absolute value of the acceleration a is equal to or higher than ath, the process proceeds on to step S6, where the driver is informed through the monitor 13 and the speaker 14 that the condition for operating the parking assist system 100 is not fulfilled. Subsequently, a driving prohibition flag Xap of the parking assist system 100 is set to 1 in step S7, after which the routine ends. In this case, the above-mentioned parking assist is cancelled.

When the inclination angle of the road surface is steep and the component of the gravitational acceleration g in the road surface direction is large, increasing the vehicle speed is difficult in the case of an uphill slope, and the braking force required to decrease the vehicle speed increases in the case of a downhill slope. Accordingly, the vehicle speed is likely to increase, and a case where the automatic steering system cannot keep up may arise. However, the parking assist is cancelled when the inclination angle of the road surface is steep, which reduces the load on the system, and the driver can be prompted to execute a proper operation.

Meanwhile, in step S4, when it is determined that the absolute value of the acceleration a is lower than ath, the process proceeds on to step S8, assuming that the condition for operating the system is fulfilled. Then, the operation prohibiting flag Xap of the parking assist system 100 is set to 0, after which the routine ends. In this case, the above-mentioned parking assist is continuously executed.

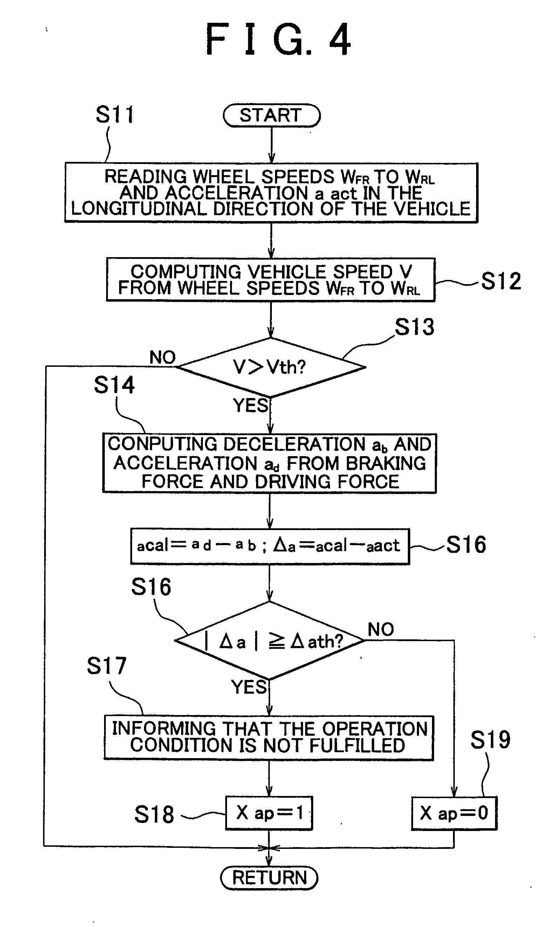

Next, a second operation setting routine will be explained with reference to FIG. 4. FIG. 4 is a flow chart illustrating the second operation setting routine. The routine is repeatedly executed at predetermined intervals of time during the parking assist routine. The parking assist control is continued only when the operation prohibiting flag Xap is set to 0 within the routine. When the operation prohibiting flag Xap is set to 1, the parking assist control is stopped and canceled. Note that an initial value at the time of setting the parking assist is 0.

In step S11, the wheel speeds W_{FR} to W_{RL} of each wheel which are read by the wheel speed sensor 32, and the acceleration a act of the vehicle in the longitudinal direction which is read by the acceleration sensor 33 are read. In step S12, the vehicle speed V is computed from the wheel speeds W_{FR} to W_{RL} of each wheel. In step S13, the absolute value of the vehicle speed V and the threshold value Vth of the vehicle V are compared. Here, Vth is a sufficiently low vehicle speed (e.g., 0.5 km/h), but can not be set at 0 km/h unlike the first operation setting process, since the vehicle needs to be moving in order to calculate a deceleration and acceleration to be described later.

When the absolute value of the vehicle speed V is equal to or lower than Vth, it is determined that the vehicle is substantially stationary, and the succeeding determination processes are skipped and the routine ends. When the absolute value of the vehicle speed V exceeds Vth, the process proceeds on to step S14, and a deceleration a_{b} by braking is determined from the brake hydraulic pressure, which is an output from a hydraulic sensor (not shown) arranged in the actuator 34 or the wheel cylinder 38. Also, driving torque information based on a rotation speed of the engine 22 from the engine ECU 21 is received and an acceleration a_{d} by the driving torque is determined.

In step S15, an estimated acceleration a cal is obtained as a difference between the acceleration a_{d} and deceleration a_{b} obtained as above and then a deviation Δa between the estimated acceleration a cal and the actual acceleration a act is determined.

In step S16, an absolute value of the determined deviation Δa and a threshold value Δath are compared. On a flat road whose inclination angle θ is 0, the deviation Δa should be 0 since the estimated acceleration a cal substantially agrees with the actual acceleration a act. A high absolute value of Δa indicates that the component gsin θ of the gravitational acceleration g in the road surface direction acting in addition to the estimated acceleration a cal is large, that is, the inclination angle θ of the road surface is steep.

Consequently, in step S16, when it is determined that an absolute value of a deviation Δa is equal to or higher than a threshold value Δath, the process proceeds on to step S17 to inform the driver through the monitor 13 and the speaker 14 that the condition for operating the parking assist system 100 is not fulfilled. Then, in step S18, the operation prohibiting flag Xap of the parking assist system 100 is set to 1, after which the routine ends. As a result, the parking assist control is cancelled.

In the control, it is determined that the vehicle is moved to a position at which the inclination angle of the road surface is steep during the automatic parking and the parking assist is cancelled, which reduces the load on the system and prompts the driver to execute the proper operation, thus making it possible to execute a reliable process.

Meanwhile, in step S16, when it is determined that the absolute value of a deviation Δa is lower than Δath, the process proceeds on to step S19 assuming that the condition for operating the system is fulfilled, and the operation prohibiting flag Xap of the parking assist system 100 is set to 0, after which the routine ends. In this case, the above-mentioned parking assist control is continued.

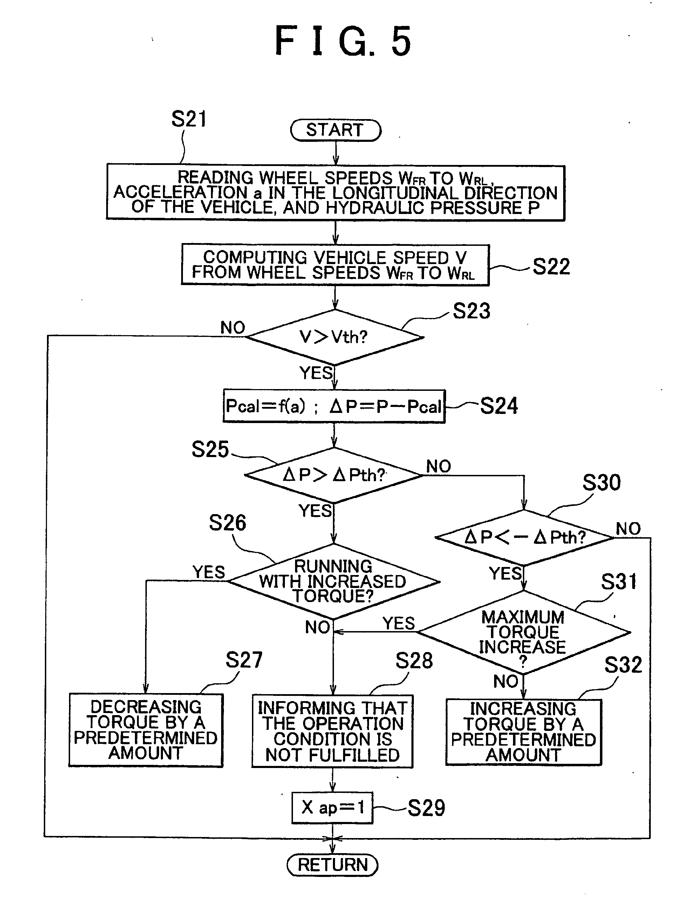

Next, a third operation setting routine will be explained with reference to FIG. 5. FIG. 5 is a flow chart illustrating the third operation setting routine. The routine is repeatedly executed at a predetermined intervals of time during the parking assist routine. The parking assist control is continued only when the operation prohibiting flag Xap is set to 0 within the routine. When the operation prohibiting flag Xap is set to 1, the parking assist control is stopped and canceled at that point. Note that an initial value of Xap at the setting time of the parking assist is 0. The third operation setting routine is different from the first and second operation setting routines in that a control for varying an amount of torque increase is executed in the third operation setting routine.

In step S21, the wheel speeds W_{FR} to W_{RL} of each wheel read by the wheel speed sensor 32, the acceleration a of the vehicle in the longitudinal direction read by the acceleration sensor 33, and a brake hydraulic pressure P, which is an output from a hydraulic sensor (not shown) arranged inside the actuator 34 or the wheel cylinder 38 are read. In step S22, the vehicle speed V is computed from the wheel speeds W_{FR} to W_{RL} of each wheel. In step S23, the absolute value of the vehicle speed V and the threshold value Vth are compared. Here, Vth is an sufficiently low vehicle speed (e.g., 0.5 km/h). However, since the parking assist system must be operating in order to calculate the after-mentioned estimated hydraulic pressure, Vth cannot be set at 0 km/h, unlike the first operation setting.

When the absolute value of the vehicle speed V is lower than Vth, it is determined that the vehicle is substantially stationary, and the succeeding determination process is skipped, after which the routine ends. When the absolute value of the vehicle V exceeds Vth, the process proceeds on to step S24, and a brake hydraulic pressure Pcal which is estimated from the current acceleration a is obtained. In addition, a difference (ΔP) between the actual hydraulic pressure P and the estimated hydraulic pressure Pcal is calculated. At this time, the brake hydraulic pressure Pcal is calculated on the basis of a relation between an acceleration and a brake hydraulic pressure which are obtained when the vehicle is running on a flat road in a regular torque state (i.e., a state other than the torque increased state).

In Step S25, whether or not the determined ΔP exceeds the threshold value ΔPth is determined. When ΔP exceeds the threshold value ΔPth, it is determined that the vehicle is in a state where the load placed on the brake system requires a higher hydraulic pressure than the estimated hydraulic pressure, that is, the vehicle is on the downhill slope where the vehicle accelerates due to gravity. Then, a predetermined torque decrease process is executed.

More specifically, the process proceeds on to step S26 to determine whether or not the engine is running in the torque increased state. When it is determined that the vehicle is currently in the torque increased state, the process proceeds on to step S27 to reduce the torque, which has been increased, by a predetermined amount, after which the routine ends. Meanwhile, when it is determined in step S26 that the torque increase has already been cancelled, the process proceeds on to step S28 to inform the driver that the condition for operating the parking assist system 100 is not fulfilled. In step S29, the operation prohibiting flag Xap of the parking assist system 100 is set to 1, after which the routine ends.

Meanwhile, in step S25, when it is determined that ΔP is lower than the threshold value Pth, the process proceeds on to step S30 to determine whether or not ΔP is lower than a threshold value -ΔPth. When it is determined ΔP is lower than the threshold value -ΔPth, it is determined that the vehicle is in a state where the actually applied hydraulic pressure is considerably lower than the estimated hydraulic pressure, that is, the vehicle is on the uphill slope where the vehicle decelerates due to gravity. Then, a predetermined torque increase process is executed.

More specifically, the process proceeds on to step S31 to determine whether or not the engine is currently in the maximum torque increased state. When the engine has not yet reached the point at which the torque can no longer increase (i.e., point of maximum torque), the process proceeds on to step S32 to increase the torque by a predetermined amount, after which the routine ends. Meanwhile, when the engine has reached the point of maximum torque, the process proceeds on to step S28 to inform the driver through the monitor 13 and the speaker 14 that the condition for operating the parking assist system 100 is not fulfilled. In step S29, the operation prohibiting flag Xap of the parking assist system 100 is set to 1, after which the routine ends.

Alternatively, when it is determined in step S30 that ΔP is equal to or higher than the threshold value ΔPth, the succeeding processes are skipped, after which the routine ends. In this case, the torque increased state is maintained as it is.

As a result of repeating the routine, the vehicle runs on the downhill slope in the torque increased state, and the degree of torque increase is gradually reduced when the braking force is excessive. This prevents excessive braking force from being applied, and suppresses the load on the brake system. Also, on a steeply inclined downhill slope where an excessive load is on the brake system even when the torque increase is cancelled, the parking assist is cancelled and the driver is informed of that fact. This prevents the parking assist from being continued with excessive braking force applied to the vehicle.

Meanwhile, in a case where the vehicle is running on the uphill slope, when torque increase amount is not adequate, adequate acceleration can be obtained and the vehicle speed range can be made use of up to the upper limit vehicle speed by increasing the torque gradually. On the steeply inclined uphill slope where it is difficult for the vehicle to reach the upper limit vehicle speed, the parking assist is canceled and the driver is informed of that fact. This prevents the parking assist from being continued with the vehicle speed range not adequately made use of.

As a result, it becomes possible to reduce the load on the system and prompt the driver to execute the proper operation, which enables the driver to reliably execute the parking operation.

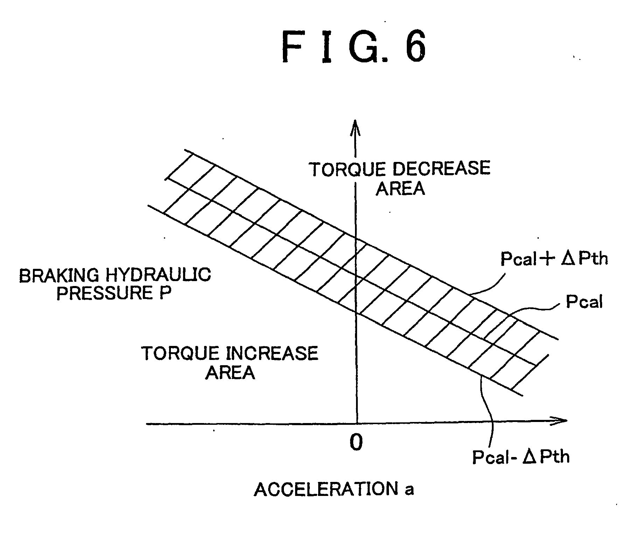

FIG. 6 is a graph showing a relation between the acceleration a and the brake hydraulic pressure P which are used in the routine. When the actual hydraulic pressure P is between Pcal - ΔPth and Pcal + ΔPth, no excessive braking force is needed in the low speed range while the vehicle speed range can be used up to the upper limit vehicle speed with a sufficient ability to accelerate and take off. As a result, the torque increased state is maintained as it is. On the contrary, when the actual hydraulic pressure P is lower than Pcal - ΔPth, although the braking force is not excessive, adequate acceleration cannot be obtained. It is therefore difficult to make use of the vehicle speed range up to the upper limit vehicle speed, and the ability to accelerate and take off diminishes. In this case, the torque is increased which the torque can be increased. However, when the torque has already been increased up to the preset upper limit at this time, the parking assist is cancelled. On the contrary, when the actual hydraulic pressure P is higher than Pcal + ΔPth, since the braking force is excessive, the driving force is reduced to decrease the necessary braking force by decreasing the torque when the torque can be decreased. However, when the torque increase has been cancelled and the torque cannot be further decreased at this time, the parking assist is cancelled.

The above-mentioned three types of routines can be combined. Also, a process for changing the torque increased state in the third routine may be incorporated into the first and second routines.

So far, an example in which the absolute values of the determination threshold values are the same in each case of the uphill slope and the downhill slope has been explained. However, each determination threshold value may be different between the uphill slope and the downhill slope. For example, with an uphill slope, it is preferable to set the determination threshold values based on a case where the upper limit vehicle speed cannot be obtained in the maximum torque increased state. On the other hand, with a downhill slope, it is preferable to set the determination threshold values based on a case where the braking force required to maintain the upper limit vehicle speed is equal to or higher than the predetermined value. In this way, the vehicle speed range from when the vehicle is stationary to the upper limit vehicle speed can be made used of, and also the excessive braking force can be prevented from being applied.

So far, an embodiment of the parking assist system having the automatic steering function has been explained. However, the invention can be applied to a parking assist system which executes steering guidance that informs the driver of the proper steering amount, but does not automatically switch to the automatic steering. In addition, the invention can be applied to, for example, an independent running control system which enables a vehicle speed to be controlled only by operating a brake pedal in a wider speed range than the running control system 110 in the above-described embodiments. In this case, parking, stopping, and moving of the vehicle, which are usually repeated, can be carried out in an appropriate manner with the running control system.

According to the invention as described above, whether the parking assist is executed is determined according to the inclination of the road surface. When the parking assist is executed, the state of that operation can be set also according to the inclination of the road surface. Thus, the vehicle speed range from the state where the vehicle is stationary to the upper limit vehicle speed can be reliably used while preventing excessive braking force from being applied and ensuring necessary driving force. This, as a result, makes it possible to maintain a desirable controllability of the vehicle while assuring a reduced load on the brake system.

## Claims

1. A parking consist system (110) executing a vehicle speed control mode for generating a predetermined driving torque and applying a braking force to a vehicle such that a vehicle speed does not exceed an upper limit vehicle speed, **characterized by** comprising :
a control portion (10) which determines an inclination of a road surface and sets an operation state of the vehicle speed control mode based on a result of that determination, so that the parking assist is cancelled when the inclination angle of the road surface is steep.

2. The parking consist system (110) according to claim 1, **characterized in that:**
a determination on whether to execute the vehicle speed control mode is made when setting the operation state of the vehicle speed control mode. .

3. The parking consist system(110) according to claim 1, **characterized in that:**
a determination on whether to execute the vehicle speed control mode is made and the predetermined driving torque is adjusted when setting the operation state of the vehicle speed control mode.

4. The parking consist system (110) according to any one of claims 1 to 3, **characterized in that:**
the inclination is determined based on an acceleration of the vehicle at the time of setting the vehicle speed control mode while the vehicle is stationary.

5. The parking consist system (110) according to any one of claims 1 to 3, **characterized in that**:
the inclination is determined based on a deviation between an estimated acceleration which is estimated from a driving force and a braking force, and an actual acceleration.

6. The parking consist system (110) according to any one of claims 1 to 3, **characterized in that**:
the inclination is determined based on a deviation between an actual braking force and a braking force estimated from the acceleration of the vehicle.

7. The parking consist system (110) according to any one of claims 1 to 6, **characterized in that**:
when it is determined that the vehicle cannot run at or above a predetermined vehicle speed with the predetermined driving torque, an operation of the vehicle speed control mode is prohibited.

8. The parking consist system (110) according to any one of claims 1 to 6, **characterized in that:**
when it is determined that the vehicle speed reaches or exceeds the upper limit vehicle speed even when a predetermined braking force is applied, the operation of the vehicle speed control mode is prohibited.

9. A parking consist system according to any one of claims 1 to 8 for assisting a driver in moving a vehicle to a target parking position which is set only by a braking operation by the driver using position detection means (43) and an automatic steering system (120), wherein a state of a parking assist operation is set in accordance with a state of an operation of the vehicle speed control mode.

10. A method for controlling a parking consist system (110) including a vehicle speed control mode for generating a predetermined driving torque and applying a braking force to a vehicle such that a vehicle speed does not exceed an upper limit vehicle speed, **characterized by** comprising the steps of:
determining an inclination of a road surface, and
setting an operation state of the vehicle speed control mode based on a result of that determination, wherein the parking assist is cancelled when the inclination angle of the road surface is steep.

11. The method for controlling the parking consist system (110) according to claim 10, **characterized in that:**
a determination on whether to execute the vehicle speed control mode is made when setting the operation state of the vehicle speed control mode.

12. The method for controlling the parking consist system (110) according to claim 10, **characterized in that:**
a determination on whether to execute the vehicle speed control mode is made and the predetermined driving torque is adjusted when setting the operation state of the vehicle speed control mode.

13. The method for controlling the parking consist system (110) according to any one of claims 10 to 12, **characterized in that:**
the inclination is determined based on an acceleration of the vehicle at the time of setting the vehicle speed control mode while the vehicle is stationary.

14. The method for controlling the parking consist system (110) according to any one of claims 10 to 12, **characterized in that:**
the inclination is determined based on a deviation between an estimated acceleration estimated from a driving force and a braking force, and an actual acceleration.

15. The method for controlling the parking consist system (110) according to any one of claims 10 to 12, **characterized in that:**
the inclination is determined based on a deviation between an actual braking force and a braking force estimated from the acceleration of the vehicle.

16. The method for controlling the parking consist system (110) according to any one of claims 10 to 15, **characterized in that:**
when it is determined that the vehicle cannot run at or above a predetermined vehicle speed with the predetermined driving torque, an operation of the vehicle speed control mode is prohibited.

17. The method for controlling the parking consist system (110) according to any one of claims 10 to 15, **characterized in that**:
when it is determined that the vehicle reaches or exceeds the upper limit vehicle speed even when a predetermined braking force is applied, the operation of the vehicle speed control mode is prohibited.

## Patentansprüche

1. Parkassistenzsystem (110), das einen Fahrzeuggeschwindigkeit-Regelungsmodus zur Erzeugung eines vorbestimmten Antriebsmoments ausführt und eine Bremskraft derart auf ein Fahrzeug ausübt, dass eine Fahrzeuggeschwindigkeit eine obere Grenz-Fahrzeuggeschwindigkeit nicht überschreitet, **dadurch gekennzeichnet, dass** es umfasst:
- einen Regelungsabschnitt (10), der eine Neigung einer Straßenoberfläche bestimmt und einen Operationszustand des Fahrzeuggeschwindigkeit-Regelungsmodus auf der Grundlage eines Ergebnisses dieser Bestimmung einstellt, so dass die Parkassistenz aufgehoben wird, wenn der Neigungswinkel der Straßenoberfläche steil ist.

2. Parkassistenzsystem (110) nach Anspruch 1, **dadurch gekennzeichnet, dass** eine Bestimmung darüber, ob der Fahrzeuggeschwindigkeit-Regelungsmodus ausgeführt werden soll, gemacht wird, wenn der Operationszustand des Fahrzeuggeschwindigkeit-Regelungsmodus eingestellt wird.

3. Parkassistenzsystem (110) nach Anspruch 1, **dadurch gekennzeichnet, dass** eine Bestimmung darüber, ob der Fahrzeuggeschwindigkeit-Regelungsmodus ausgeführt werden soll, gemacht wird und das vorbestimmte Antriebsmoment eingestellt wird, wenn der Fahrzeuggeschwindigkeit-Regelungsmodus eingestellt wird.

4. Parkassistenzsystem (110) nach einem der Ansprüche 1 bis 3, **dadurch gekennzeichnet, dass** die Neigung auf der Grundlage einer Beschleunigung des Fahrzeugs zum Zeitpunkt der Einstellung des Fahrzeuggeschwindigkeit-Regelungsmodus während das Fahrzeug stationär ist gemacht wird.

5. Parkassistenzsystem (110) nach einem der Ansprüche 1 bis 3, **dadurch gekennzeichnet, dass** die Neigung auf der Grundlage einer Abweichung zwischen einer geschätzten Beschleunigung, die von einer Antriebskraft geschätzt wird, und einer Bremskraft, und einer tatsächlichen Beschleunigung bestimmt wird.

6. Parkassistenzsystem (110) nach einem der Ansprüche 1 bis 3, **dadurch gekennzeichnet, dass** die Neigung auf der Grundlage einer Abweichung zwischen einer tatsächlichen Bremskraft und einer von der Beschleunigung des Fahrzeugs geschätzten Bremskraft bestimmt wird.

7. Parkassistenzsystem (110) nach einem der Ansprüche 1 bis 6, **dadurch gekennzeichnet, dass**, wenn bestimmt wird, dass das Fahrzeug nicht mit oder oberhalb einer vorbestimmten Fahrzeuggeschwindigkeit mit dem vorbestimmten Drehmoment fahren kann, eine Operation des Fahrzeuggeschwindigkeit-Regelungsmodus unterdrückt wird.

8. Parkassistenzsystem (110) nach einem der Ansprüche 1 bis 6, **dadurch gekennzeichnet, dass**, wenn bestimmt wird, dass die Fahrzeuggeschwindigkeit die obere Grenz-Fahrzeuggeschwindigkeit erreicht oder überschreitet, selbst wenn eine vorbestimmte Bremskraft ausgeübt wird, die Operation des Fahrzeuggeschwindigkeit-Regelungsmodus unterdrückt wird.

9. Parkassistenzsystem (110) nach einem der Ansprüche 1 bis 8 zur Unterstützung eines Fahrers beim Bewegen eines Fahrzeugs zu einer Ziel-Parkposition, die nur durch eine Bremsoperation durch den Fahrer unter Verwendung eines Positionserfassungsmittels (43) und eines automatischen Lenksystems (120) eingestellt wird, wobei ein Zustand einer Parkassistenzoperation in Übereinstimmung mit einem Operationszustand des Fahrzeuggeschwindigkeit-Regelungsmodus eingestellt wird.

10. Verfahren zur Regelung eines Parkassistenzsystems (110), das einen Fahrzeuggeschwindigkeit-Regelungsmodus zur Erzeugung eines vorbestimmten Antriebsmoments und Ausüben einer Bremskraft auf ein Fahrzeug umfasst, so dass eine Fahrzeuggeschwindigkeit eine obere Grenz-Fahrzeuggeschwindigkeit nicht überschreitet, **dadurch gekennzeichnet, dass** es die Schritte umfasst:
- Bestimmen einer Neigung einer Straßenoberfläche; und
- Einstellen eines Operationszustandes des Fahrzeuggeschwindigkeit-Regelungsmodus auf der Grundlage eines Ergebnisses dieser Bestimmung, wobei die Parkassistenz aufgehoben wird, wenn der Neigungswinkel der Straßenoberfläche steil ist.

11. Verfahren zur Regelung des Parkassistenzsystems (110) nach Anspruch 10, **dadurch gekennzeichnet, dass** eine Bestimmung dahingehend, ob der Fahrzeuggeschwindigkeit-Regelungsmodus ausgeführt werden soll, gemacht wird, wenn der Operationszustand des Fahrzeuggeschwindigkeit-Regelungsmodus eingestellt wird.

12. Verfahren zur Regelung des Parkassistenzsystems (110) nach Anspruch 10, **dadurch gekennzeichnet, dass** eine Bestimmung dahingehend, ob der Fahrzeuggeschwindigkeit-Regelungsmodus ausgeführt werden soll, gemacht wird, und das vorbestimmte Antriebsmoment eingestellt wird, wenn der Operationszustand des Fahrzeuggeschwindigkeit-Regelungsmodus eingestellt wird.

13. Verfahren zur Regelung des Parkassistenzsystems (110) nach einem der Ansprüche 10 bis 12, **dadurch gekennzeichnet, dass** die Neigung auf der Grundlage einer Beschleunigung des Fahrzeugs zum Zeitpunkt der Einstellung des Fahrzeuggeschwindigkeit-Regelungsmodus während das Fahrzeug stationär ist bestimmt wird.

14. Verfahren zur Regelung des Parkassistenzsystems (110) nach einem der Ansprüche 10 bis 12, **dadurch gekennzeichnet, dass** die Neigung auf der Grundlage einer Abweichung zwischen einer geschätzten Beschleunigung, geschätzt von einer Antriebskraft, und einer Bremskraft, und einer tatsächlichen Beschleunigung bestimmt wird.

15. Verfahren zur Regelung des Parkassistenzsystems (110) nach einem der Ansprüche 10 bis 12, **dadurch gekennzeichnet, dass** die Neigung auf der Grundlage einer Abweichung zwischen einer tatsächlichen Bremskraft und einer von der Beschleunigung des Fahrzeugs geschätzten Bremskraft bestimmt wird.

16. Verfahren zur Regelung des Parkassistenzsystems (110) nach einem der Ansprüche 10 bis 15, **dadurch gekennzeichnet, dass**, wenn bestimmt wird, dass das Fahrzeug nicht mit oder oberhalb einer vorbestimmten Fahrzeuggeschwindigkeit mit dem vorbestimmten Antriebsmoment fahren kann, eine Operation des Fahrzeuggeschwindigkeit-Regelungsmodus unterdrückt wird.

17. Verfahren zur Regelung des Parkassistenzsystems (110) nach einem der Ansprüche 10 bis 15, **dadurch gekennzeichnet, dass**, wenn bestimmt wird, dass das Fahrzeug die obere Grenz-Fahrzeuggeschwindigkeit erreicht oder überschreitet, selbst wenn eine vorbestimmte Bremskraft ausgeübt wird, die Operation des Fahrzeuggeschwindigkeit-Regelungsmodus unterdrückt wird.

## Revendications

1. Système d'aide au stationnement (110) exécutant un mode de commande de la vitesse du véhicule pour générer un couple d'entraînement prédéterminé et appliquer une force de freinage à un véhicule de telle sorte qu'une vitesse de véhicule ne dépasse pas une vitesse de véhicule limite supérieure, **caractérisé en ce qu'**il comprend :
une partie de commande (10) qui détermine. une inclinaison d'une surface de route et établit un état opérationnel du mode de commande de la vitesse du véhicule sur la base d'un résultat de cette détermination, de sorte que l'aide au stationnement est empêchée quand l'angle d'inclinaison de la surface de route est abrupt.

2. Système d'aide au stationnement (110) selon la revendication 1, **caractérisé en ce que** :
une détermination de l'exécution ou la non exécution du mode de commande de la vitesse du véhicule est faite lors de l'établissement de l'état opérationnel du mode de commande de la vitesse du véhicule.

3. Système d'aide au stationnement (110) selon la revendication 1, **caractérisé en ce que**:
une détermination s'il faut ou non exécuter le mode de commande de la vitesse du véhicule est faite et le couple d'entraînement prédéterminé est ajusté lors de l'établissement de l'état opérationnel du mode de commande de la vitesse du véhicule.

4. Système d'aide au stationnement (110) selon l'une quelconque des revendications 1 à 3, **caractérisé en ce que**:
l'inclinaison est déterminée sur la base d'une accélération du véhicule au moment de l'établissement du mode de commande de la vitesse du véhicule tandis que le véhicule est stationnaire.

5. Système d'aide au stationnement (110) selon l'une quelconque des revendications 1 à 3, **caractérisé en ce que** :
l'inclinaison est déterminée sur la base d'un écart entre une accélération estimée qui est estimée à partir d'une force d'entraînement et une force de freinage, et une accélération naturelle.

6. Système d'aide au stationnement (110) selon l'une quelconque des revendications 1 à 3, **caractérisé en ce que** :
l'inclinaison est déterminée sur la base d'un écart entre une force de freinage effective et une force de freinage estimée à partir de l'accélération du véhicule.

7. Système d'aide au stationnement (110) selon l'une quelconque des revendications 1 à 6, **caractérisé en ce que** :
quand il est déterminé que le véhicule ne peut pas rouler à ou au-dessus d'une vitesse de véhicule prédéterminée avec le couple d'entraînement prédéterminé, une opération du mode de commande de la vitesse du véhicule est empêchée.

8. Système d'aide au stationnement (110) selon l'une quelconque des revendications 1 à 6, **caractérisé en ce que** :
quand il est déterminé que la vitesse du véhicule atteint ou dépasse la vitesse de véhicule limite supérieure même quand une force de freinage prédéterminée est appliquée, l'opération du mode de commande de la vitesse du véhicule est empêchée.

9. Système d'aide au stationnement selon l'une quelconque des revendications 1 à 8, destiné à aider un conducteur à déplacer un véhicule jusqu'à un emplacement de stationnement cible qui est établi seulement par une opération de freinage par le conducteur en utilisant un moyen de détection d'emplacement (43) et un système de braquage automatique (120), dans lequel
un état d'une opération d'aide au stationnement est établi en fonction d'un état d'une opération du mode de commande de la vitesse du véhicule.

10. Procédé de commande d'un système d'aide au stationnement (110) comportant un mode de commande de la vitesse du véhicule pour générer un couple d'entraînement prédéterminé et appliquer une force de freinage à un véhicule de telle sorte qu'une vitesse de véhicule ne dépasse pas une vitesse de véhicule limite supérieure, **caractérisé en ce qu'**il comprend les étapes consistant à :
déterminer une inclinaison d'une surface de route, et
établir un état opérationnel du mode de commande de la vitesse du véhicule sur la base d'un résultat de cette détermination, dans lequel l'aide au stationnement est annulée quand l'angle d'inclinaison de la surface de route est abrupt.

11. Procédé de commande du système d'aide au stationnement (110) selon la revendication 10, **caractérisé en ce que** :
une détermination de l'exécution ou la non exécution du mode de commande de la vitesse du véhicule est faite lors de l'établissement de l'état opérationnel du mode de commande de la vitesse du véhicule.

12. Procédé de commande du système d'aide au stationnement (110) selon la revendication 10, **caractérisé en ce que** :
une détermination de l'exécution ou la non exécution du mode de commande de la vitesse du véhicule est faite et le couple d'entraînement prédéterminé est ajusté lors de l'établissement de l'état opérationnel du mode de commande de la vitesse du véhicule.

13. Procédé de commande du système d'aide au stationnement (110) selon l'une quelconque des revendications 10 à 12, **caractérisé en ce que** :
l'inclinaison est déterminée sur la base d'une accélération du véhicule au moment de l'établissement du mode de commande de la vitesse du véhicule tandis que le véhicule est stationnaire.

14. Procédé de commande du système d'aide au stationnement (110) selon l'une quelconque des revendications 10 à 12, **caractérisé en ce que** :
l'inclinaison est déterminée sur la base d'un écart entre une accélération estimée qui est estimée à partir d'une force d'entraînement et une force de freinage, et une accélération naturelle.

15. Procédé de commande du système d'aide au stationnement (110) selon l'une quelconque des revendications 10 à 12, **caractérisé en ce que**:
l'inclinaison est déterminée sur la base d'un écart entre une force de freinage effective et une force de freinage estimée à partir de l'accélération du véhicule.

16. Procédé de commande du système d'aide au stationnement (110) selon l'une quelconque des revendications 10 à 15, **caractérisé en ce que** :
quand il est déterminé que le véhicule ne peut pas rouler à ou au-dessus d'une vitesse de véhicule prédéterminée avec le couple d'entraînement prédéterminé, une opération du mode de commande de la vitesse du véhicule est empêchée.

17. Procédé de commande du système d'aide au stationnement (110) selon l'une quelconque des revendications 10 à 15, **caractérisé en ce que** :
quand il est déterminé que le véhicule atteint ou dépasse la vitesse de véhicule limite supérieure même quand une force de freinage prédéterminée est appliquée, l'opération du mode de commande de la vitesse du véhicule est empêchée.
